Europäisches Patentamt

European Patent Office

Office européen des brevets

(19)

(11) Numéro de publication : **0 449 713 A1**

(12)

# DEMANDE DE BREVET EUROPEEN

(21) Numéro de dépôt : **91400790.1**

(51) Int. Cl.⁵ : **G21C 19/20**

(22) Date de dépôt : **22.03.91**

(30) Priorité : 27.03.90 FR 9003906

(43) Date de publication de la demande :
02.10.91 Bulletin 91/40

(84) Etats contractants désignés :
DE GB IT

(71) Demandeur : FRAMATOME
Tour Fiat 1, Place de la Coupole
F-92400 Courbevoie (FR)

(72) Inventeur : De Seroux, Nicolas
324 Rue Garibaldi
F-69007 Lyon (FR)
Inventeur : Limouzin, Dominique
74 Rue Cuvier
F-69006 Lyon (FR)

(74) Mandataire : Bouget, Lucien et al
Cabinet Lavoix 2, Place d'Estienne d'Orves
F-75441 Paris Cédex 09 (FR)

(54) **Hotte de transfert d'un assemblage combustible prélevé dans le coeur d'un réacteur nucléaire et refroidi par circuit gaz intégré.**

(57)    La hotte de transfert (1) comporte un corps massif (2) en matériau absorbant les rayonnements dans lequel est ménagé un logement (3) de direction axiale pour recevoir l'assemblage (4). La hotte (1) comporte au moins un circuit (15) de refroidissement par gaz de l'assemblage (4) intégré au corps (2) de la hotte (1). Le circuit de refroidissement comporte au moins un canal principal (16) de circulation de gaz de direction axiale ménagé dans le corps (2) de la hotte, au moins un dispositif de mise en circulation de gaz (18) dans le circuit de refroidissement (15) et au moins un dispositif (17) d'épuration du gaz en circulation, disposés au voisinage d'une extrêmité du canal principal (16). Deux canaux secondaires (20, 21) ménagés dans le corps (2) de la hotte permettent de relier chacune des extrémités du canal principal (16) avec une extrémité correspondante du logement (3) de l'assemblage combustible (4) par l'intermédiaire duquel se referme le circuit le refroidissement.

EP 0 449 713 A1

# FIG. 2

L'invention concerne une hotte de transfert d'un assemblage combustible prélevé dans le coeur d'un réacteur nucléaire et notamment d'un réacteur nucléaire à neutrons rapides refroidi par un métal liquide.

Les réacteurs nucléaires à neutrons rapides refroidis par un métal liquide tel que le sodium comportent un coeur constitué par des assemblages de forme prismatique et allongée plongés dans du sodium liquide contenu dans la cuve du réacteur.

Il peut être nécessaire de prélever des assemblages combustibles dans le coeur du réacteur, à l'intérieur de la cuve, par exemple pour remplacer des assemblages usagés ou défectueux par des assemblages neufs. Les assemblages qui sont sortis de la cuve du réacteur sont à l'état irradié et produisent des rayonnements radioactifs. De plus, ces assemblages ont une activité résiduelle et sont le siège d'un dégagement thermique produit par les réactions nucléaires dans le combustible irradié. Enfin, ces assemblages retiennent, au moment de leur sortie de la cuve, une certaine quantité de sodium liquide.

Les assemblages combustibles sortis de la cuve du réacteur nucléaire doivent donc être disposés dans des conteneurs assurant la protection biologique du milieu dans lequel les assemblages sont déplacés ou stockés de manière temporaire. Il est également nécessaire de refroidir l'assemblage pendant son transfert.

On utilise habituellement, pour effectuer le transfert et le stockage temporaire des assemblages combustibles des réacteurs nucléaires à neutrons rapides, des hottes comportant un corps massif en un matériau absorbant les rayonnements nucléaires dans lequel est ménagé un logement pour un assemblage combustible nu ou noyé dans un étui rempli de sodium pour assurer son refroidissement. Les assemblages combustibles pour réacteurs à neutrons rapides ont une forme prismatique et une longueur importante par rapport à leurs dimensions transversales. Le corps de la hotte présente en conséquence une forme allongée et le logement de l'assemblage combustible est disposé dans le corps massif, dans une position centrale et dans une direction sensiblement axiale.

Le logement débouche, par une ouverture obturable de manière étanche, à l'une des extrémités du corps de la hotte, de manière à permettre l'introduction de l'assemblage dans la hotte et son extraction. Ces opérations sont effectuées grâce à un ensemble de levage comportant des treuils associé à la hotte ; on assure généralement le raccordement du dispositif d'obturation de la hotte à un dispositif correspondant associé par-exemple à un puits de traversée des assemblages.

Pour assurer le refroidissement de l'assemblage pendant son transfert, on utilise un ensemble de circuits et d'appareils permettant de faire circuler un gaz neutre de refroidissement au contact de l'assemblage combustible disposé dans le logement de la hotte et de refroidir et d'épurer ce gaz en circulation.

L'ensemble de circuits et d'appareils nécessaire à ces opérations comportant en particulier des soufflantes, des échangeurs thermiques et des épurateurs de gaz, par exemple des séparateurs cyclone, est installé à l'extérieur de la hotte, si bien que le volume total de l'installation est important et que cette installation ne présente pas toutes les garanties de sécurité nécessaires ; par exemple, de l'oxygène atmosphérique est susceptible de se mélanger au gaz de refroidissement si l'un des circuits ou appareils extérieurs à la hotte présente une fuite. En outre, des fluides radioactifs sont amenés à circuler à l'extérieur du corps de la hotte assurant une protection biologique.

Le but de l'invention est donc de proposer une hotte de transfert d'un assemblage combustible prélevé dans le coeur d'un réacteur nucléaire et en particulier d'un réacteur nucléaire à neutrons rapides refroidi par un métal liquide, comportant un corps massif de forme allongée en matériau absorbant les rayonnements dans lequel est ménagé un logement de direction axiale pour l'assemblage, débouchant par une ouverture obturable de manière étanche, à l'une des extrémités axiales du corps de la hotte et un moyen de levage pour le déplacement de l'assemblage dans la direction axiale, par rapport au corps de la hotte, cette hotte de transfert permettant le refroidissement de l'assemblage par circulation de gaz, dans de très bonnes conditions de sécurité, sans utiliser une installation encombrante extérieure au corps de la hotte.

Dans ce but, la hotte suivant l'invention comporte au moins un circuit de refroidissement par gaz de l'assemblage intégré au corps de la hotte et comprenant au moins un canal principal de circulation de gaz de direction sensiblement axiale ménagé dans le corps de la hotte, suivant une partie substantielle de sa longueur, au moins un dispositif d'épuration du gaz en circulation et un moyen de mise en circulation du gaz disposés au voisinage d'une extrémité du canal principal et deux canaux secondaires de liaison de chacune des extrémités du canal principal avec une extrémité correspondante du logement de l'assemblage combustible par l'intermédiaire duquel se referme le circuit de refroidissement.

Afin de bien faire comprendre l'invention, on va maintenant décrire, à titre d'exemple non limitatif, en se reportant aux figures jointes en annexe, un mode de réalisation d'une hotte de transfert suivant l'invention.

La figure 1 est une vue d'ensemble, en perspective éclatée et en coupe partielle d'une hotte de transfert suivant l'invention.

La figure 2 est une vue en coupe schématique d'une hotte suivant l'invention montrant un circuit de refroidissement par gaz d'un assemblage.

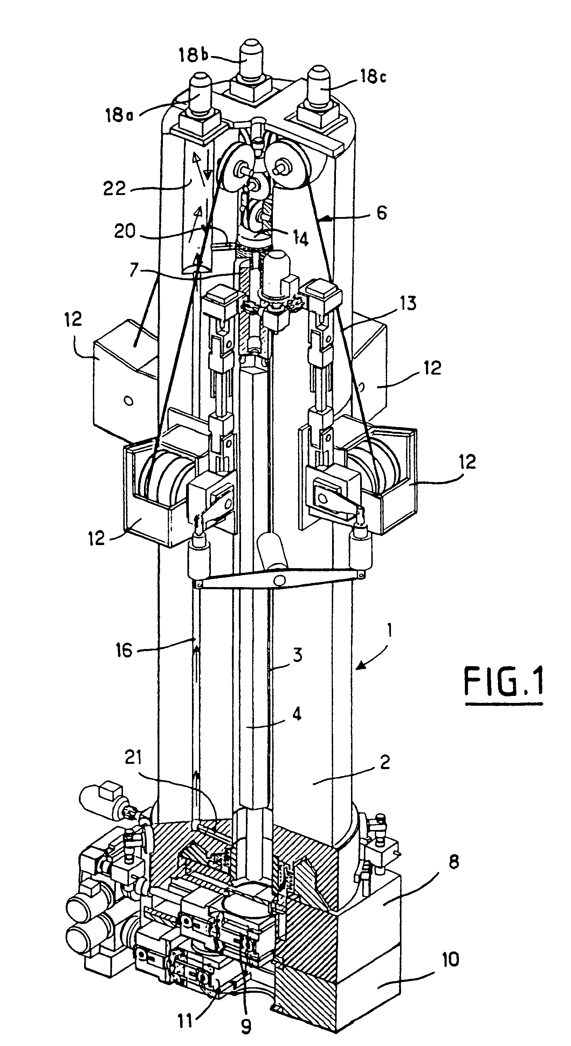

Sur la figure 1, on voit une hotte de transfert d'un assemblage combustible pour réacteur nucléaire désignée de manière générale par le repère 1. La hotte 1 comporte un corps de hotte 2 de forme cylindrique comportant à sa partie centrale et suivant son axe un alésage 3 traversant le corps de hotte suivant toute sa longueur. Le corps de hotte est constitué par une pièce massive en acier de forte épaisseur dans la direction radiale et de grande longueur.

Dans le cas d'un assemblage combustible pour réacteur à neutrons rapides dont la longueur est supérieure à 4 m et présentant une section de forme hexagonale dont le côté a une longueur de 125 mm, le corps 2 de la hotte présente un diamètre extérieur de 1,30 m, un alésage central d'un diamètre de 0,30 m et une longueur de l'ordre de 6 m. Le corps de la hotte présente donc une épaisseur de paroi de 0,50 m ; sa masse totale est voisine de 55 tonnes.

Sur la figure 1, l'assemblage combustible 4 a été représenté dans sa position de transport à l'intérieur du logement central 3 du corps de la hotte.

L'assemblage 4 n'occupe qu'une partie de la longueur du logement 3 ; dans la partie supérieure du logement 3 est placé le grappin 7 du dispositif de levage 6 de l'assemblage.

La partie inférieure du corps 2 se raccorde au support 8 d'une vanne de hotte 9 motorisée permettant de réaliser l'ouverture ou la fermeture étanche de l'extrémité de l'alésage 3 à sa partie inférieure débouchant à l'extrémité du corps 2.

Le support 8 de la vanne de hotte 9 est susceptible de se raccorder au support 10 d'une vanne de puits 11 permettant de réaliser l'ouverture ou la fermeture étanche d'un puits de traversée, par exemple un passage de traversée d'une dalle recouvrant la cuve d'un réacteur remplie de sodium liquide et renfermant le coeur du réacteur.

Lorsque les vannes 9 et 11 sont superposées et ouvertes, on peut faire passer l'assemblage combustible 4 d'une position immergée dans le sodium liquide à sa position de transfert à l'intérieur de la hotte 1 en utilisant le dispositif de levage 6.

Le dispositif de levage 6 comporte quatre treuils 12 placés à 90° les uns des autres autour du corps 2 de la hotte. Sur chacun des treuils 12 est enroulée une extrémité d'un câble 13 qui permet, par l'intermédiaire de poulies de renvoi et de levage logées dans la partie supérieure du corps de la hotte 1, de réaliser le déplacement du grappin 7 comportant des doigts d'accrochage de l'assemblage 4, à l'intérieur de l'alésage 3 et dans son prolongement axial. On effectue ainsi le déplacement de l'assemblage 4 pour réaliser son introduction dans la hotte ou, au contraire, son extraction de la hotte.

Le grappin 7 comporte une partie creuse de forme cylindrique portant les doigts d'accrochage de l'assemblage solidaire à sa partie supérieure d'un ensemble de levage et de guidage 14 portant les poulies de levage et percé radialement de canaux communiquant avec l'alésage central du grappin 7.

Lorsque l'assemblage combustible 4 est dans sa position de transfert à l'intérieur de la hotte 1, comme représenté sur la figure 1, l'ensemble 14 se trouve dans la partie supérieure de l'alésage 3 du corps de la hotte, dans une position définie par rapport au corps massif 2 de la hotte.

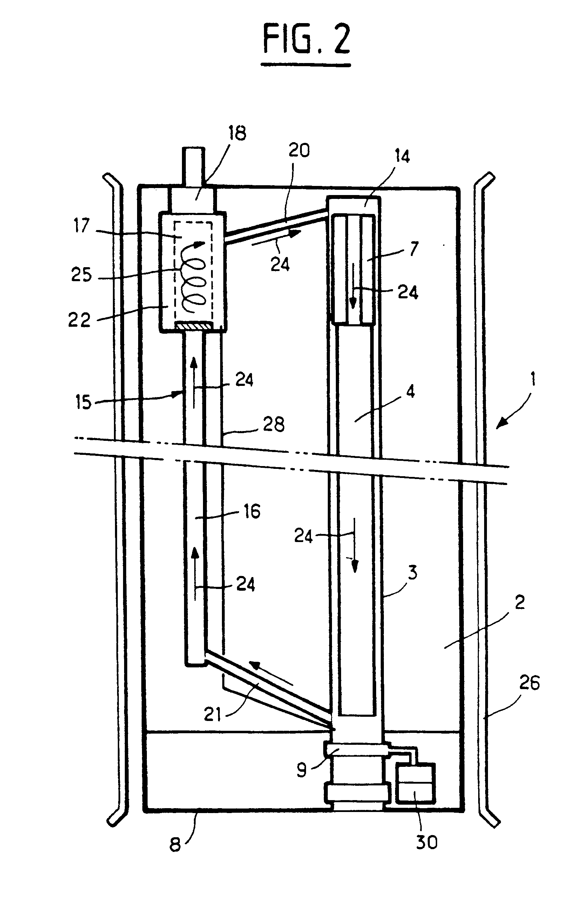

En se reportant aux figures 1 et 2, on va maintenant décrire un circuit 15 de mise en circulation et d'épuration du gaz de refroidissement de l'assemblage 4 disposé dans le logement 3 du corps 2 de la hotte.

Le circuit de refroidissement désigné de manière générale par le repère 15 comporte un canal principal 16 usiné dans le corps 2 de la hotte, un dispositif 18 de mise en circulation du gaz dans le circuit, un dispositif 17 d'épuration du gaz en circulation et deux canaux de jonction 20 et 21 du canal principal 16 et du logement 3 de l'assemblage 4, par l'intermédiaire duquel se referme le circuit 15.

L'ensemble de refroidissement de l'assemblage comporte quatre circuits identiques au circuit 15 placés dans des positions situées à 90° les unes des autres autour de l'axe du corps 2 et du logement 3 de la hotte.

Le canal principal 16 de chacun des circuits de refroidissement a une direction sensiblement axiale parallèle à l'axe du logement 3 et du corps cylindrique massif 2 de la hotte 1. Le canal 16 s'étend, dans la direction axiale, sur une partie substantielle de la longueur axiale du corps 2. Le diamètre du canal 16 est sensiblement inférieur au diamètre du logement 3. Par exemple, dans le cas présent, le diamètre du canal principal 16 est de 50 mm.

Le canal principal 16 débouche, à sa partie supérieure, dans un logement 22 usiné dans le corps 2 de la hotte et dont le diamètre est sensiblement supérieur au diamètre du canal 16.

Le dispositif d'épuration de gaz 17 constitué par un séparateur du type cyclone est disposé dans le logement 22 de manière que l'extrémité supérieure du canal principal 16 débouchant dans le logement 22 soit en communication avec l'entrée du séparateur.

L'extrémité du logement 22 opposée à l'extrémité d'entrée du séparateur 17 est en communication avec une soufflante 18 constituant le moyen de mise en circulation du gaz de refroidissement dans le circuit ménagé à l'intérieur du corps de la hotte.

La soufflante 18 est en communication par son orifice d'aspiration avec la sortie du séparateur cyclone 17 et assure le refoulement et le soufflage d'un gaz de refroidissement inerte à la périphérie du logement 22 communiquant, par l'intermédiaire du canal supérieur de jonction 20, avec la partie supérieure du logement 3 de l'assemblage 4.

Comme représenté de manière schématique par les flèches 24 sur la figure 2, le gaz de refroidissement qui peut être constitué par du gaz inerte tel que de l'argon est refoulé par la soufflante 18 dans le canal 20 puis, par l'intermédiaire de la pièce 14, dans l'alésage central du grappin 7. Le soufflage de gaz de refroidissement en contact avec l'assemblage 4 et suivant la direction longitudinale de cet assemblage est effectué par l'intermédiaire de l'alésage central du grappin 7.

Le gaz inerte ayant circulé au contact de l'assemblage et suivant toute sa longueur et assurant le refroidissement de l'assemblage est renvoyé à la partie inférieure du canal principal 16, par l'intermédiaire du canal de jonction 21.

Le gaz de refroidissement ayant circulé au contact de l'assemblage dont il assure le refroidissement s'est échauffé, sa température de sortie dépendant de l'énergie dégagée par l'assemblage combustible 4 et du débit de gaz en circulation dans le circuit de refroidissement. De plus, le gaz de refroidissement circulant au contact de l'assemblage entraîne des aérosols de sodium et des gouttelettes de sodium résiduelles qui sont retenues par l'enveloppe prismatique et les éléments combustibles ou aiguilles de l'assemblage, au moment où cet assemblage est extrait du sodium liquide, lors de son introduction dans la hotte 1.

Le gaz de refroidissement parvenant à la partie inférieure du canal principal 16 est donc chaud, chargé de gouttelettes de sodium et de sodium gazeux.

Le débit de circulation relativement important du gaz imposé par la soufflante 18 et le diamètre faible du conduit 16 entraîne un écoulement turbulent du gaz de refroidissement à l'intérieur du canal 16, cette circulation se produisant dans la direction verticale et de bas en haut.

Du fait de son écoulement turbulent dans le canal 16, sur une partie substantielle de la hauteur du corps 2 de la hotte, le gaz se refroidit très rapidement en cédant sa chaleur à la masse de métal du corps 2.

Le corps 2 de la hotte est entouré par un écran de forme tubulaire ou bouclier thermique 26 qui assure le refroidissement du corps 2 de la hotte, par thermosiphon, de l'air de refroidissement circulant, grâce aux courants de convection, entre le corps 2 et le bouclier 26.

La chaleur transmise par le gaz de refroidissement et par l'assemblage combustible au corps massif 2 de la hotte est donc éliminée par circulation naturelle.

Le gaz refroidi portant en suspension des aérosols et des gouttelettes de sodium parvient à la partie supérieure du canal principal 16 dans le logement 22 et pénètre dans le séparateur cyclone 17. Le gaz de refroidissement circule de manière tourbillonnaire, comme schématisé par la flèche 25, dans le séparateur 17, de manière que les gouttelettes de sodium sont séparées du gaz de refroidissement et se rassemblent à la partie inférieure du séparateur, avant de s'écouler par gravité dans un canal vertical 28 usiné à l'intérieur du corps 2 de la hotte. Le canal 28 débouche, à sa partie supérieure, dans le logement 22 et, à sa partie inférieure, dans un réservoir de recueil de sodium 30 disposé dans le support 8 de la vanne 9 de fermeture du logement 3 de la hotte.

Le gaz aspiré par la soufflante 18 à la sortie du séparateur 17 est donc un gaz refroidi et épuré qui est renvoyé par l'intermédiaire du canal de jonction 20 dans le logement 3, pour assurer le refroidissement de l'assemblage 4.

Le dispositif intégré dans le corps de la hotte fonctionne donc en circuit fermé, un appoint de gaz de refroidissement pouvant cependant être assuré par un réservoir auxiliaire d'argon non représenté.

Comme il est visible sur la figure 1, chacun des quatre circuits de refroidissements de la hotte comporte une soufflante telle que 18a, 18b et 18c fixée à la partie supérieure du corps 2 de la hotte, dans le prolongement d'un logement 22 et d'un canal 16 relié au logement central 3 de la hotte, par l'intermédiaire de canaux de jonction 20 et 21.

Dans chacun des logements 22 est disposé un séparateur de type cyclone tel que le séparateur 17.

Le gaz de refroidissement refroidi et épuré refoulé dans un conduit de jonction 20 par la soufflante pénètre dans un canal radial de la pièce de guidage 14 communiquant avec l'alésage central du grappin creux 7. La pièce de guidage 14 comporte donc quatre canaux radiaux disposés à 90° l'un par rapport à l'autre dans le prolongement des quatre canaux de jonction 20.

La hotte de transfert suivant l'invention présente donc l'avantage de permettre un refroidissement d'un assemblage combustible, sans nécessiter l'utilisation de moyens auxiliaires extérieurs au corps de la hotte.

Le refroidissement de l'assemblage est assuré par une circulation de gaz qui est susceptible d'entraîner des impuretés, par exemple des aérosols de sodium et des gouttelettes de métal liquide tel que le sodium retenues par l'assemblage combustible. L'épuration du gaz est réalisée par des moyens intégrés au corps de la hotte, si bien que le dispositif de refroidissement peut fonctionner en circuit totalement fermé.

Aucune partie du ou des circuits de refroidissement ne se trouve à l'extérieur du corps de la hotte auquel ces circuits sont totalement intégrés. On évite ainsi des risques d'introduction d'oxygène dans le circuit de refroidissement par gaz inerte ou de fuite de produit radioactif à l'extérieur de la hotte.

La hotte suivant l'invention présente donc une plus grande sécurité de fonctionnement et un encombrement beaucoup plus faible que les dispositifs de transfert d'assemblages suivant l'art antérieur.

L'invention ne se limite pas au mode de réalisation qui a été décrit.

C'est ainsi que la hotte suivant l'invention peut comporter un seul circuit de refroidissement ou un nombre quelconque de circuits inférieur ou supérieur à quatre.

Le dispositif d'épuration associé à chacun des circuits de refroidissement peut être constitué par un dispositif différent d'un séparateur cyclone. Les moyens de mise en circulation du gaz dans le circuit de refroidissement peuvent également être constitués par des dispositifs différents de soufflantes.

Il est possible également d'adjoindre à chacun des circuits de refroidissement, des dispositifs de refroidissement du gaz en circulation à l'intérieur du canal principal, par exemple des dispositifs favorisant les échanges thermiques entre le gaz et le corps de la hotte, tels que des ailetages, chicanes ou autres dispositifs de déviation de la circulation du flux gazeux. Ces dispositifs peuvent également jouer un rôle quant à la séparation des impuretés entraînées par le gaz de refroidissement.

Les moyens de récupération du métal liquide séparé du gaz de refroidissement peuvent être réalisés d'une autre manière et disposés dans une autre partie de la hotte que dans l'exemple de réalisation.

Enfin, la hotte selon l'invention peut s'appliquer au transfert et au stockage d'assemblages combustibles différents d'assemblages de réacteurs nucléaires à neutrons rapides refroidis par du métal liquide.

## Revendications

1.- Hotte de transfert dun assemblage combustible prélevé dans le coeur d'un réacteur nucléaire, en particulier dun réacteur nucléaire à neutrons rapides refroidi par un métal liquide, comportant un corps massif (2) de forme allongée en matériau absorbant les rayonnements, dans lequel est ménagé un logement (3) de direction axiale pour l'assemblage (4) débouchant par une ouverture obturable de manière étanche à l'une des extrémités axiales du corps (2) de la hotte et au moins un moyen de levage (12) pour le déplacement de l'assemblage (4) dans la direction axiale, par rapport au corps (2) de la hotte, caractérisée par le fait quelle comporte de plus au moins un circuit (15) de refroidissement par gaz de l'assemblage. (4) entièrement intégré au corps (2) de la hotte (1) et comprenant au moins un canal principal (16) de circulation de gaz de direction sensiblement axiale ménagé dans le corps (2) de la hotte (1), disposé suivant une partie substantielle de sa longueur, au moins un moyen de mise en circulation de gaz (18) et un dispositif d'épuration (17) du gaz en circulation, au voisinage d'une extrémité du canal principal (16) et deux canaux secondaires de liaison (20, 21) de chacune des extrémités du canal principal (16) avec une extrémité correspondante du logement (3) de l'assemblage combustible (4) par l'intermédiaire duquel se referme le circuit de refroidissement.

2.- Hotte de transfert suivant la revendication 1, caractérisée par le fait qu'elle comporte de plus une capacité (30) de récupération de métal liquide entraîné par le gaz de refroidissement reliée par un canal (28) ménagé dans le corps (2) de la hotte à une zone voisine de l'extrémité du canal principal (16) reliée au dispositif d'épuration de gaz (17).

3.- Hotte de transfert suivant la revendication 2. caractérisée par le fait que la capacité (30) de récupération de métal liquide est disposée à l'une des extrémités du corps (2) de la hotte, à l'intérieur d'un support (8) dans lequel est fixée une vanne (9) d'obturation étanche de l'ouverture du logement (3) débouchant à l'une.des extrémités axiales du corps (2) de la hotte (1).

4.- Hotte de transfert suivant l'une quelconque des revendications 1 à 3, caractérisée par le fait que le dispositif (17) d'épuration du gaz en circulation est constitué par un séparateur du type cyclone.

5.- Hotte de transfert suivant l'une quelconque des revendications 1 à 4, caractérisée par le fait que le dispositif (17) d'épuration du gaz de refroidissement en circulation est disposé dans un logement (22) ménagé dans le corps (2) de la hotte (1) et communiquant avec une extrémité du canal principal (16).

6.- Hotte de transfert suivant l'une quelconque des revendications 1 à 5 caractérisée par le fait que le moyen (18) de mise en circulation de gaz dans le circuit de refroidissement (15) est constitué par une soufflante (18) ayant une ouverture d'entrée et d'aspiration communiquant avec la sortie du dispositif d'épuration de gaz (17) et une ouverture de refoulement et de soufflage de gaz de refroidissement épuré dans un canal secondaire de liaison (20) relié au logement (3) de l'assemblage (4) de manière à faire circuler le gaz de refroidissement et à assurer son épuration en circuit fermé.

7.- Hotte de transfert suivant l'une quelconque des revendications 1 à 6, caractérisée par le fait que le conduit principal (16) présente un diamètre faible, de manière que le gaz de refroidissement en écoulement turbulent dans le canal principal (16) se refroidisse au contact du corps (2) de la hotte dans lequel est ménagé le canal (16).

8.- Hotte de transfert suivant l'une quelconque des revendications 1 à 7, caractérisée par le fait qu'elle comporte, autour du corps (2), une enveloppe tubulaire (26) assurant un refroidissement du corps (2) par thermosiphon.

9.- Hotte de transfert suivant l'une quelconque des revendications 1 à 8, caractérisée par le fait que le moyen de levage (12, 13, 14, 7) de l'assemblage (4) comporte un grappin (7) creux de forme tubulaire dont l'alésage intérieur est en communication avec un canal (20) de liaison du circuit de refroidissement, lorsque l'assemblage (4) est en position de transfert à l'intérieur du logement (3) du corps (2) de la hotte (1) et fixé à l'extrémité du grappin (7), le soufflage de gaz de refroidissement en contact avec l'assemblage (4) étant effectué par l'intermédiaire du grappin (7) de forme creuse.

10.- Hotte de transfert suivant l'une quelconque des revendications 1 à 9, caractérisée ,par le fait que le corps (2) de la hotte comporte quatre circuits de refroidissement disposés sensiblement à 90° les uns des autres autour de l'axe du corps cylindrique creux (2).

FIG.1

# FIG. 2

EP 0 449 713 A1

**Office européen des brevets**

## RAPPORT DE RECHERCHE EUROPEENNE

Numero de la demande

EP 91 40 0790

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-2 726 042 (SCHUMJAKIN et al.) * Page 6, alinéa 1; page 43, ligne 16 - page 44, alinéa 1; page 56, alinéas 2,3; figures 1,2 * | 1,6,9 | G 21 C 19/20 |
| | --- | | |
| A | US-A-3 629 062 (H.O. MUENCHOW) * Colonne 2, ligne 79 - colonne 3, ligne 29; figures 1,3 * | 1,9 | |
| | --- | | |
| A | NUCLEAR TECHNOLOGY, vol. 78, no. 3, septembre 1987, pages 284-294, La Grange Park, Illinois, US; D. ALTHAUS et al.: "Refueling system fabrication and testing" * Page 287, colonne de gauche, dernier alinéa; page 288, colonne de droite, avant dernier alinéa - page 289, colonne de gauche, dernier alinéa; figures 3,4 * | 1-4,6 | |
| | --- | | |
| A | FR-A-2 445 589 (C.E.A.) * Page 3, ligne 10 - page 4, ligne 27; figure 1 * | 1 | **DOMAINES TECHNIQUES RECHERCHES (Int. Cl.5)** G 21 C |
| | ----- | | |

Le présent rapport a été établi pour toutes les revendications

| Lieu de la recherche | Date d'achèvement de la recherche | Examinateur |
|---|---|---|
| LA HAYE | 04-07-1991 | JANDL F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

                                           
& : membre de la même famille, document correspondant

EPO FORM 1503 03.82 (P0402)